# EUROPEAN PATENT SPECIFICATION

(11) **EP 2 143 826 B1**
(45) Date of publication and mention of the grant of the patent: **04.11.2015**
(21) Application number: 09165061.4
(22) Date of filing: 09.07.2009
(51) Int. Cl.: C25B 1/24

(54) **Method of electrolytically synthesizing nitrogen trifluoride**
Verfahren zur elektrolytischen Synthetisierung von Stickstofftrifluorid
Procédé de synthèse électrolyte de trifluorure de nitrogène

(30) Priority: 10.07.2008 JP 2008180616
(43) Date of publication of application: 13.01.2010
(73) Proprietor: PERMELEC ELECTRODE LTD., Fujisawa-shi, Kanagawa 252-0816 (JP)
(72) Inventor: Tasaka, Akimasa, Kyoto-shi Kyoto 610-1125 (JP)
(74) Representative: Grünecker Patent- und Rechtsanwälte PartG mbB

(56) References cited:
- DATABASE CA [Online] CHEMICAL ABSTRACTS SERVICE, COLUMBUS, OHIO, US; TASAKA, AKIMASA ET AL: "Electrochemical reaction of ammonium pentafluoroniobate on carbon in molten fluoride" XP002542269 retrieved from STN Database accession no. 112:127726 & SCIENCE AND ENGINEERING REVIEW OF DOSHISHA UNIVERSITY , 30(3), 171-80 CODEN: DDRKAZ; ISSN: 0036-8172, 1989,
- DATABASE CA [Online] CHEMICAL ABSTRACTS SERVICE, COLUMBUS, OHIO, US; TASAKA, AKIMASA ET AL: "Anodic behavior of LiF-impregnated carbon and surface analysis of pristine carbon (FE-5) electrode polarized at various potentials in dehydrated melts of NH4F.cntdot.KF.cntdot.mHF (m = 3 and 4)" XP002542271 retrieved from STN Database accession no. 146:303804 & JOURNAL OF NEW MATERIALS FOR ELECTROCHEMICAL SYSTEMS , 9(3), 297-303 CODEN: JMESFQ; ISSN: 1480-2422, 2006,
- DATABASE CA [Online] CHEMICAL ABSTRACTS SERVICE, COLUMBUS, OHIO, US; TASAKA, AKIMASA ET AL: "Effect of anode materials on NF3 formation" XP002542270 retrieved from STN Database accession no. 129:20828 & JOURNAL OF THE ELECTROCHEMICAL SOCIETY , 145(4), 1160-1164 CODEN: JESOAN; ISSN: 0013-4651, 1998,
- TASAKA ET AL: "Electrochemical synthesis and application of NF3", JOURNAL OF FLUORINE CHEMISTRY, ELSEVIER, NL, vol. 128, no. 4, 23 March 2007 (2007-03-23), pages 296-310, XP005934886, ISSN: 0022-1139, DOI: 10.1016/J.JNUCMAT.2007.05.043

## Description

### TECHNICAL FIELD

The present invention relates to a method of electrolytically synthesizing nitrogen trifluoride gas from a mixture of molten salts including ammonium fluoride. More particularly, the invention relates to an electrolytic synthesis method in which even when the cell is operated at a high current density, anode effect is inhibited from occurring and sludge generation by electrode wear is avoided and which enables the synthesis of nitrogen trifluoride gas to be continued at a high efficiency.

### BACKGROUND ART

Nitrogen trifluoride (NF₃) is the fluoride of nitrogen which was first synthesized in 1928 by Ruff et al. through molten salt electrolysis. The trifluoride was consumed in large quantities as a fuel oxidizer in planetary probe rocketries projected and practiced by NASA, the United States, and has come to have much interest. At present, nitrogen trifluoride is being used in large quantities as a gas for dry etching in a semiconductor device production step and as a cleaning gas for cleaning CVD chambers in semiconductor device or liquid-crystal display production steps. In recent years, the PFCs (perfluorinated compounds) used in large quantities as a CVD chamber cleaning gas, such as carbon tetrafluoride (CF₄) and dicarbon hexafluoride (C₂F₆), were found to considerably contribute to the global warming phenomenon, and the use thereof is being internationally restricted or prohibited based on, e.g., Kyoto Protocol. However, NF₃ is not included in these chemicals whose use is being restricted or prohibited. In addition, NF₃ attains a high etching rate and can be decomposed by a pretreatment apparatus for discharge. Because of this, NF₃ is coming to be used in larger quantities.

In the case where a carbonaceous electrode is used in a molten salt mixture bath containing fluoride ions, the fluorine generation reaction or electrolytic fluorination reaction shown in scheme (1), which is caused by the discharge of fluoride ions, occurs on the surface of the electrode. Simultaneously therewith, a fluorinated graphite (CF)ₙ having covalent C-F bonds as shown in scheme (2) generates to coat the electrode surface. This (CF)ₙ has an exceedingly low surface energy and hence has poor wettability by the electrolytic bath. The (CF)ₙ is thermally decomposed due to Joule's heat into carbon tetrafluoride (CF₄), dicarbon hexafluoride (C₂F₆), etc. as shown in scheme (3). However, when the rate of the reaction shown by scheme (2) is higher than that of the reaction shown by scheme (3), the surface of the carbon electrode is coated with (CF)ₙ and this electrode comes to have a reduced area of contact with the electrolyte. Finally, current comes not to flow, and the so-called anode effect occurs.

HF₂⁻ → 1/2F₂ + HF + e⁻ (1)

nC + nHF₂⁻ → (CF)ₙ + nHF + ne⁻ (2)

(CF)ₙ' → ·xC + yCF₄, zC₂F₆, etc. (3)

For producing NF₃, there are a chemical process and a molten salt electrolysis process. In the chemical process, KF-HF molten salts are electrolyzed to thereby obtain F₂ and this F₂ is reacted with ammonia in molten acid ammonium fluoride or reacted with a metal fluoride/ammonium complex to thereby obtain NF₃.

In the molten salt electrolysis process, either ammonium fluoride (NH₄F)-KF-HF molten salts or NH₄F-HF molten salts are electrolyzed to directly obtain NF₃. In the case where NH₄F-KF-HF molten salts are used as an electrolytic bath, a carbonaceous electrode is employed as an anode. In this process, complicated control of water concentration in the electrolytic bath and an operation at a current density not higher than a critical value are necessary for preventing the occurrence of anode effect as in the case described above where KF-HF molten salts are electrolyzed to obtain F₂. There also is a problem that the CF₄ and C₂F₆ which have been generated according to scheme (3) reduce the purity of the target NF₃ gas. There is a problem that since CF₄ and NF₃ have exceedingly close boiling points (the difference in boiling point is as small as 1°C), separation by distillation is difficult and a highly costly purification technique must be employed in order to obtain high-purity NF₃.

In the case where NH₄F-HF molten salts are used as an electrolytic bath, nickel is usually employed as an anode. This process has an advantage that NF₃ not contaminated with CF₄ can be synthesized. However, nickel dissolves during electrolysis and accumulates as a nickel fluoride sludge on the bottom of the electrolytic cell. Because of this, periodic electrolytic-bath replacement or periodic electrode replacement is indispensable, and this makes it difficult to continuously produce NF₃. Furthermore, nickel dissolution occurs in an amount corresponding to 3-5% of the quantity of electricity applied, and increasing a current density considerably enhances nickel dissolution. It is therefore difficult to conduct the electrolysis at a high current density.

Diamond electrodes are recently attracting attention as a carbonaceous electrode which causes no anode effect or as a nickel-substitute electrode for NF₃ production (non-patent document 1 and non-patent document 2).

Conductive-diamond electrodes are a thermally and chemically stable electrode material, and various electrolytic processes utilizing a conductive-diamond electrode have been proposed. Patent document 1 proposes a treatment method in which an organic matter in a waste liquid is oxidatively decomposed with a conductive-diamond electrode employing a conductive diamond as an electrode catalyst. Patent document 2 proposes a method in which a conductive-diamond electrode is used as each of an anode and a cathode to electrochemically treat an organic matter. Patent document 3 proposes a method of ozone synthesis in which a conductive-diamond electrode is used as an anode. Patent document 4 proposes the synthesis of peroxosulfuric acid in which a conductive-diamond electrode is used as an anode. Furthermore, patent document 5 proposes a method of microorganism destruction in which a conductive-diamond electrode is used as an anode.

Patent document 6 discloses that a conductive diamond is applicable to the electrolysis of molten salts including hydrogen fluoride. It was found that when a conductive diamond is used as an anode to conduct the electrolysis of NH₄F-HF molten salts, then the wettability of the electrode by the electrolyte does not decrease and anode effect does not occur. It was further found that in this electrolysis, sludge generation by electrode wear is inhibited and CF₄ generation is exceedingly slight. Although the cause of these has not been elucidated, the following is presumed. In the conductive-diamond electrode, an outermost surface of the diamond layer comes to have fluorine ends through electrolysis. Except this, the chemically stable diamond structure does not change. Because of this, the generation of a compound having a covalent C-F bond does not proceed and anode effect, CF₄ generation, and electrode wear are inhibited. It is further presumed that because the diamond structure is stable, this structure is maintained even when a voltage is applied at a high current density.

Patent document 7 discloses a process for fluorine gas production in which a highly oxidized metal fluoride is heated in a gas stream. However, this document includes no statement concerning the use of a highly oxidized metal fluoride in a method of electrolytic NF₃ synthesis through molten salt electrolysis.

Non-Patent Document 3 describes the addition of (NH₄)₃NbOF₆ to a KF-HF-NH₄F bath for NF₃ production. In Non-Patent Document 4, the electrolytic production of NF₃ in NH₄F·KF·4HF is disclosed.
Non-Patent Document 1: Electrochemistry, 75, 934 (2007)
Non-Patent Document 2: Journal of Fluorine Chemistry, 296, 128 (2007)
Non-Patent Document 3: Tasaka, A. et al.; Science and Engineering Review of Doshisha University, 30(3), 171-180 (1989)
Non-Patent Document 4: Tasaka, A. et al.; Journal of New Materials for Electrochemical Systems, 9(3), 297-303 (2006).
Patent Document 1: JP-A-7-299467
Patent Document 2: JP-A-2000-226682
Patent Document 3: JP-A-11-269685
Patent Document 4: JP-A-2001-192874
Patent Document 5: JP-A-2004-195346
Patent Document 6: JP-A-2006-249557
Patent Document 7: JP-A-2007-176768

### SUMMARY OF THE INVENTION

### TECHNICAL PROBLEMS

However, those carbonaceous electrodes are low in current efficiency in NF₃ production as compared with nickel electrodes. Furthermore, in the case of using a diamond electrode, increasing a current density results in a further decrease in current efficiency. Such conventional techniques have been unsuitable for practical use. It has hence been necessary to attain an improvement for industrially utilizing a carbonaceous electrode having the advantage of generating no sludge.

An object of the invention is to provide a method of electrolysis which can stably synthesize NF₃ while diminishing the occurrence of anode effect, generation of CF₄, and generation of a sludge even when a carbonaceous electrode is used or a diamond electrode is used at a high current density.

Other objects of the present invention will become apparent from the following description.

### SOLUTION TO THE PROBLEMS

The object of the present invention is solved on the basis of claims 1 to 6.

The invention provides an electrolytic synthesis method of nitrogen trifluoride, comprising electrolytically synthesizing nitrogen trifluoride gas from ammonium fluoride in an ammonium fluoride-containing molten salt mixture using a carbonaceous electrode as an anode, wherein the method comprises:
a step of dissolving, in the molten salts, metal ions capable of electrolytically yielding a highly oxidized metal fluoride through reaction with fluorine radicals (F·) that are generated upon the discharge of fluoride ions which are a component of the ammonium fluoride,
thereby reacting the metal ions with the fluorine radicals (F·) to yield the highly oxidized metal fluoride, and reacting the highly oxidized metal fluoride with ammonium ions on a surface of the electrode and in a solution to synthesize nitrogen trifluoride gas. In the method of the invention, ammonium ions can be reacted with the highly oxidized metal fluoride in the solution not to mention on the surface of the electrode and near the electrode to thereby synthesize nitrogen trifluoride gas.

It is preferred that the carbonaceous electrode is one selected from an amorphous-carbon electrode, a graphite electrode, a carbon electrode containing a metal fluoride, and a conductive-diamond electrode. In the case of an electrode coated with a conductive diamond, the electrode preferably comprises a base made of graphite or amorphous carbon. The molten salt mixture preferably comprises NH₄F-KF-HF or NH₄F-HF. The metal ions comprise ions of at least one metal selected from the group consisting of Ni, Mn and Co. The anions serving as the counter ions preferably are fluoride ions. Although the counter ions may be ions of an oxide or another halide, such ions undergo, upon addition to the electrolytic bath, anion exchange and become a fluoride.

The current density of the anode at the time of the electrolysis is desirably 0.01-10 A/cm². The concentration of the metal ions in the electrolyte is desirably from 0.01 M to a saturation concentration. In an actual operation, use may be made of a method in which metal ions are added in an amount not smaller than that corresponding to a saturation concentration to cause the metal ions to exist in the electrolysis system in an amount corresponding to supersaturation. In this case, however, the excess amount precipitates as a sludge or salt and the solution part has a saturation concentration. Consequently, the term saturation as used in the invention includes an embodiment in which metal ions are added in an amount corresponding to supersaturation.

The invention is explained below in detail.

In the electrolytic synthesis of NF₃, the target anode reaction is represented by the following scheme.

NH₄⁺ + 7F⁻ → NF₃ + 4HF + 6e⁻ (4)

Besides the target reaction, side reactions such as the following schemes occur to yield N₂.

NH₄⁺ + 8F⁻ → N₂ + 8HF + 6e⁻ (5)

2NH₃ → N₂ + 6H⁺ + 6e⁻ (6)

Other reaction products include N₂F₂, N₂F₄, O₂, and N₂O.

For reference, with a nickel anode, a nickel dissolution reaction represented by the following scheme proceeds to generate a nickel fluoride sludge.

Ni → Ni²⁺ + 2e⁻ (7)

Although details of a reaction mechanism are described in non-patent documents 1 and 2, the fluorine radicals (F·) generated upon the discharge of fluoride ions as shown by the scheme:

(HF)ₙF⁻ → nHF + F· + e⁻ (8)

serve as a fluorinating agent in the electrolytic synthesis of NF₃. In electrolytic NF₃ synthesis with a carbonaceous electrode as an anode, the rate of the electrolytic synthesis reaction is governed by the diffusion of ammonium ions as a raw material into the electrode. In case where current is permitted to flow in an amount exceeding that corresponding to the rate of ammonium ion diffusion, the reaction between excess fluorine radicals and ammonium ions becomes unable to proceed on the electrode surface, resulting in a reduced current efficiency. Incidentally, excess fluorine radicals become fluorine molecules, and the fluorine molecules go away into the solution and react with ammonium ions in the solution. However, these ammonium ions mostly yield nitrogen, hence resulting in a decrease in current efficiency.

On the other hand, the dissolution of proper metal ions as in the invention produces the following effect. The current which is permitted to flow in an amount exceeding that corresponding to the rate of ammonium ion diffusion yields excess fluorine radicals, and these fluorine radicals react with the dissolved metal ions to yield a highly oxidized metal fluoride. This metal fluoride undergoes a disproportion reaction near the electrode and thereby becomes highly oxidized metal fluoride ions, which dissolve in the solution. When these highly oxidized metal fluoride ions are sufficiently present, reaction with the ammonium ions present in the solution proceeds rapidly, whereby the target compound, NF₃, is yielded also in the solution. In the case of nickel ions, for example, it is presumed that the reaction represented by

NH₄⁺ + 2NiF₆²⁻ + F⁻ → NF₃ + 2NiF₃⁻ + 4HF (9)

occurs and, as a result, the overall current efficiency (sum of fluorination near the electrode and fluorination in the anolyte) can be increased.

### ADVANTAGEOUS EFFECTS OF THE INVENTION

In the invention, for synthesizing nitrogen trifluoride (NF₃) from ammonium fluoride by molten salt electrolysis, metal ions are dissolved which are capable of electrolytically yielding a highly oxidized metal fluoride through reaction with fluorine radicals (F·) generated upon the discharge of fluoride ions which are a component of the ammonium fluoride. In the conventional electrolytic NF₃ synthesis for which such metal ions are not dissolved, NF₃ is synthesized by direct electrolysis occurring on the electrode surface and near the electrode, However, when current is permitted to flow in an amount exceeding that corresponding to the rate of ammonium ion diffusion, then the reaction between excess fluorine radicals and ammonium ions becomes unable to proceed on the electrode surface, resulting in a reduced current efficiency.

In contrast, in the invention, the dissolved metal ions react with excess fluorine radicals to become a highly oxidized metal fluoride, and this metal fluoride is converted to highly oxidized metal fluoride ions through a disproportion reaction near the electrode. Consequently, even when current is permitted to flow in an amount exceeding that necessary for the direct electrolysis occurring on the electrode surface and near the electrode, the current is used without being wasted and the target compound, NF₃, can be synthesized at a high current efficiency.

### DESCRIPTION OF EMBODIMENTS

The NF₃ synthesis method proposed by the invention is explained in detail.

The anode to be used in the invention is a carbonaceous electrode, which is reduced in sludge generation. Although an amorphous-carbon electrode, a graphite electrode, or a carbon electrode containing a metal fluoride is usable, it is especially desirable to use a diamond electrode because of its chemical stability. Known as the metal fluoride in the metal-fluoride-containing carbon electrode are LiF, LiF-CaF₂, MgF₂,and CaF₂.

The conductive-diamond electrode is produced by fixing a conductive diamond to an electrode base. The material and shape of the electrode base are not particularly limited so long as the material is electrically conductive. Use can be made of nonmetallic materials such as silicon, silicon carbide, graphite, and amorphous carbon and metallic materials such as titanium, niobium, zirconium, tantalum, molybdenum, tungsten, and nickel. However, a carbonaceous material such as graphite or amorphous carbon is preferred from the standpoint of chemical stability in electrolytic baths which contain hydrogen fluoride. With respect to the shape of the electrode, use may be made of a platy, meshy, rod, or pipe shape, a spherical shape such as beads, or a porous platy shape.

Methods for fixing diamond to the electrode base also are not particularly limited, and any desired one may be used. Typical processes for diamond production include a hot-filament CVD (chemical vapor deposition) process, microwave plasma CVD process, plasma arc jet process, and physical vapor deposition (PVD) process. Although a gaseous mixture of hydrogen gas and a carbon source is used as a raw material for diamond in each process, an element having a different valence (hereinafter referred to as dopant) is added in a slight amount in order to impart electrical conductivity to the diamond. The dopant preferably is boron, phosphorus, or nitrogen. The content thereof is preferably 1-100,000 ppm, more preferably 100-10,000 ppm. Whichever diamond production process is used, amorphous carbon and a graphite ingredient remain in the conductive-diamond layer synthesized. From the standpoint of the stability of the diamond layer, it is preferred that the amount of the amorphous carbon and graphite ingredient should be smaller. It is especially preferred to use a conductive diamond in which in Raman spectroscopy, the ratio of the peak intensity at 1,332 cm⁻¹ assigned to diamond to the peak intensity at 1,560 cm⁻¹ assigned to graphite G-band is in the range of from 1:0.3 to 1:0.8.

The hot-filament CVD process is explained below as a representative process for synthesizing a conductive-diamond electrode. An organic compound serving as a carbon source, such as methane, an alcohol, or acetone, and a dopant are fed to a filament together with, e.g., hydrogen gas. The filament is heated to a temperature at which hydrogen radicals or other radicals are generated, i.e., 1,800-2,800°C, and a conductive base is disposed in this atmosphere so as to be held in a range of temperatures at which diamond deposition occurs (750-950°C). The rate of feeding the gaseous mixture depends on the size of the reaction vessel. However, the pressure is preferably 15-760 Torr.

To polish the surface of the conductive base is preferred because it improves adhesion between the base and the diamond layer. The base preferably has an average surface roughness (Ra) of 0.1-15 µm and a ten-point surface roughness (Rz) of 1-100 µm. Furthermore, to fix a diamond powder as nuclei to the base surface is effective in growing an even diamond layer. A layer of fine diamond particles having a particle diameter of usually 0.001-2 µm deposits on the base. The thickness of the diamond layer can be regulated by changing deposition period. The thickness thereof is preferably regulated to 1-10 µm from the standpoint of profitability.

Any of an amorphous-carbon electrode, metal-fluoride-containing carbon electrode, and graphite electrode or the conductive-diamond-coated electrode is used as an anode, and nickel or stainless steel is used as a cathode. With these electrodes, electrolysis is conducted in NH₄F-HF molten salts or NH₄F-KF-HF molten salts at a current density of 0.01-10 A/cm², whereby NF₃ can be obtained from the anode.

The dissolution of metal ions may be accomplished by adding and dissolving a metal salt such as a fluoride (the salt preferably is NiF₂, NH₄NiF₃, or the like in the case of, e.g., nickel). Alternatively, use may be made of a method in which a given amount of a metal is immersed in the electrolyte to dissolve or anodically dissolve the metal. It is preferred that the concentration in which the metal ions are to be dissolved should be regulated to a value in the range of from 0.01 M to saturation. As the metal which forms highly oxidized metal fluoride ions, Ni, Mn or Co are used. These metals are presumed to form highly oxidized metal fluoride ions (complex ions) each including six fluoride ions coordinated.

When any two or more ofNi, Mn, Co, Li, and Cs are simultaneously used as the metal to be added or as ions thereof in the invention, then not only the metal ions in a high-order oxidation state described above but also a complex salt in a high-order oxidation state, such as, e.g., Li₂NiF₆ in the case of Li and Ni or CsNi₂F₆ in the case of Cs and Ni, deposits on the surface of the carbonaceous electrode. The complex salt deposited in a high-order oxidation state is presumed to accelerate the target fluorination reaction of ammonium ions and heighten current efficiency in NF₃ production.

As the material of the electrolytic cell, use can be made of a mild steel, nickel alloy, fluororesin, or the like from the standpoint of resistance to corrosion by high-temperature hydrogen fluoride. It is preferred that the anode side and the cathode side should be wholly or partly separated from each other by a partition wall, or diaphragm in order to prevent the NF₃ synthesized at the anode from mingling with the hydrogen gas generated at the cathode.

The NH₄F-HF molten salts as an electrolytic bath may be prepared, for example, by bubbling anhydrous hydrogen fluoride gas into ammonium monohydrogen difluoride (acid ammonium fluoride) and/or ammonium fluoride. The NH₄F-KF-HF molten salts as another electrolytic bath may be prepared, for example, by bubbling anhydrous hydrogen fluoride gas into a salt mixture of acid potassium fluoride and acid ammonium fluoride.

The electrolytic bath immediately after preparation thereof contains water in an amount of about several hundreds ppm. Because of this, in electrolytic cells employing a conventional carbon electrode as an anode, it has been necessary to remove the water, for example, by conducting dehydrating electrolysis at a low current density of 0.01 A/cm² or lower for the purpose of inhibiting anode effect. However, the electrolytic cell employing a conductive-diamond electrode does not necessitate any special operation, such as, e.g., dehydrating electrolysis, and NF₃ can be electrolytically synthesized.

A slight amount of HF accompanies the NF₃ generated at the anode. This HF can be removed by passing the NF₃ through a column packed with granular sodium fluoride. Furthermore, a small amount of nitrogen and a slight amount of oxygen and dinitrogen monoxide (nitrous oxide) are generated as by-products in the NF₃ synthesis. Of these by-products, the dinitrogen monoxide (nitrous oxide) can be removed by passing the NF₃ through water and sodium thiosulfate or through a zeolite. The oxygen can be removed with activated carbon. By removing the minor gases accompanying the NF₃, high-purity NF₃ can be synthesized.

During the electrolysis, electrode wear and sludge generation hardly proceed. Because of this, the frequency of electrolysis suspension for electrode replacement with a fresh one and electrolytic-bath replacement with a fresh one decreases. So long as HF and NH₄F (or NH₃) are replenished in amounts corresponding to those consumed by electrolysis, NF₃ synthesis can be stably conducted over a prolonged time period.

### EXAMPLES

Examples of the electrolytic synthesis of nitrogen trifluoride according to the invention and Comparative Examples are given below.

### [EXAMPLE 1]

A graphite plate was used as a conductive base to produce a conductive-diamond electrode with a hot-filament CVD apparatus under the following conditions.

A surface of the base was polished with an abrasive material composed of diamond particles having a particle diameter of 1 µm. The base surface had an average surface roughness (Ra) of 0.2 µm and a ten-point surface roughness (Rz) of 6 µm. Subsequently, diamond particles having a particle diameter of 4 nm were fixed as nuclei to the base surface, and this base was attached to the hot-filament CVD apparatus. A gaseous mixture obtained by mixing hydrogen gas with 1 vol% methane gas and 0.5 ppm trimethylboron gas was fed to the apparatus. While passing the gaseous mixture through the apparatus at a rate of 5 L/min and keeping the internal pressure of the apparatus at 75 Torr, a power was applied to the filament and the filament was heated to a temperature of 2,400°C. Under these conditions, the base had a temperature of 860°C. The CVD operation was continued for 8 hours. After completion of the CVD operation, the base was analyzed. It was ascertained through Raman spectroscopy and X-ray diffractometry that diamond had deposited. In Raman spectroscopy, the ratio of the peak intensity at 1,332 cm⁻¹ to the peak intensity at 1,560 cm⁻¹ was 1:0.4. Part of the base was destroyed and examined with an SEM. As a result, the diamond deposit was found to have a thickness of 4 µm.

The conductive-diamond electrode produced was attached as an anode in NH₄F-1.7HF molten salts immediately after preparation of the molten salts. A nickel plate was used as a cathode. NiF₂ was added to the cell so as to dissolve nickel ions in the molten salts in a saturation concentration. Thereafter, constant-current electrolysis was conducted at a current density of 0.13 A/cm². At 24 hours after initiation of the electrolysis, the gases generated at the anode were analyzed. As a result, the current efficiency concerning NF₃ production was found to be 50%. Almost no sludge generation occurred.

### [COMPARATIVE EXAMPLE 1]

Electrolysis was conducted under the same conditions as in Example 1, except that nickel ions were not dissolved. As a result, analysis of the gases generated at the anode at 24 hours after initiation of the electrolysis revealed that the current efficiency concerning NF₃ production was 36%.

### [COMPARATIVE EXAMPLE 2]

Electrolysis was conducted under the same conditions as in Example 1, except that a nickel plate was used as an anode. As a result, analysis of the gases generated at the anode at 24 hours after initiation of the electrolysis revealed that the current efficiency concerning NF₃ production was 58%. However, the cell which had been used for the electrolysis contained a large amount of a sludge.

### [EXAMPLE 2]

The same electrolysis as in Example 1 was conducted, except that the current density was changed to 0.4 A/cm². As a result, the current efficiency concerning NF₃ production was found to be 50%.

### [COMPARATIVE EXAMPLE 3]

Electrolysis was conducted under the same conditions as in Example 2, except that nickel ions were not dissolved. As a result, analysis of the gases generated at the anode at 24 hours after initiation of the electrolysis revealed that the current efficiency concerning NF₃ production was 12%.

### [EXAMPLE 3]

Lithium ions and nickel ions were dissolved in NH₄F-2HF molten salts each up to a saturation concentration, and constant-current electrolysis was conducted with the apparatus used in Example 1 under the conditions of a temperature of 120°C and a current density of 0.1 A/cm². Analysis of the gases generated at the anode at 100 hours after initiation of the electrolysis revealed that the current efficiency concerning NF₃ production was 65%.

### [COMPARATIVE EXAMPLE 4]

Electrolysis was conducted under the same conditions as in Example 3, except that the metal ions were not dissolved. As a result, analysis of the gases generated at the anode at 100 hours after initiation of the electrolysis revealed that the current efficiency concerning NF₃ production was 45%.

## Claims

1. An electrolytic synthesis method of nitrogen trifluoride, comprising electrolytically synthesizing nitrogen trifluoride gas from ammonium fluoride in an ammonium fluoride-containing molten salt mixture using a carbonaceous electrode as an anode,
wherein the method comprises:
a step of dissolving, in the molten salt mixture, metal ions capable of electrolytically yielding a highly oxidized metal fluoride through reaction with fluorine radicals (F·) that are generated upon the discharge of fluoride ions which are a component of the ammonium fluoride, thereby reacting the metal ions with the fluorine radicals (F·) to yield the highly oxidized metal fluoride, and
reacting the highly oxidized metal fluoride with ammonium ions on a surface of the electrode and in a solution to synthesize nitrogen trifluoride gas;
wherein the metal ions comprise ions of at least one metal selected from the group consisting of Ni, Mn, and Co.

2. The electrolytic synthesis method of nitrogen trifluoride according to claim 1, wherein the carbonaceous electrode is one selected from an amorphous-carbon electrode, a graphite electrode, a carbon electrode containing a metal fluoride, and a conductive-diamond electrode.

3. The electrolytic synthesis method of nitrogen trifluoride according to claim 1, wherein the carbonaceous electrode comprises a base which is made of graphite or amorphous carbon.

4. The electrolytic synthesis method of nitrogen trifluoride according to claim 1, wherein the molten salt mixture comprises NH₄F-KF-HF or NH₄F-HF.

5. The electrolytic synthesis method of nitrogen trifluoride according to claim 1, wherein the concentration of the metal ions in the electrolyte is from 0.01 M to a saturation concentration.

6. The electrolytic synthesis method of nitrogen trifluoride according to claim 1, wherein the anode has a current density of 0.01-10 A/cm² at the time of the electrolysis.

## Patentansprüche

1. Elektrolytisches Syntheseverfahren für Stickstofftrifluorid, umfassend die elektrolytische Synthese von Stickstofftrifluoridgas aus Ammoniumfluorid in einer Ammoniumfluorid enthaltenden Salzschmelzmischung unter Verwendung einer kohlenstoffartigen Elektrode als Anode, wobei das Verfahren umfasst:
das Auflösen von Metallionen in der Salzschmelzmischung, wobei die Metallionen befähigt sind, elektrolytisch ein hochoxidiertes Metallfluorid durch die Reaktion mit Fluorradikalen (F·) zu erzeugen, die durch die Entladung von Fluoridionen gebildet werden, die Bestandteil des Ammoniumfluorids sind, wodurch die Metallionen mit den Fluorradikalen (F·) zu hochoxidiertem Metallfluorid umgesetzt werden; und
das Umsetzen des hochoxidierten Metallfluorids mit Ammoniumionen auf einer Oberfläche der Elektrode und in einer Lösung zur Synthese von Stickstofftrifluoridgas;
wobei die Metallionen zumindest ein Metall ausgewählt aus der Gruppe bestehend aus Ni, Mn, und Co umfassen.

2. Elektrolytisches Syntheseverfahren für Stickstofftrifluorid gemäß Anspruch 1, wobei die kohlenstoffartige Elektrode eine ist ausgewählt aus einer amorphen Kohlenstoffelektrode, einer Graphitelektrode, eine ein Metallfluorid enthaltenden Kohlenstoffelektrode oder einer leitfähigen Diamantelektrode.

3. Elektrolytisches Syntheseverfahren für Stickstofftrifluorid gemäß Anspruch 1, wobei die kohlenstoffartige Elektrode ein aus Graphit oder amorphen Kohlenstoff hergestelltes Trägermaterial umfasst.

4. Elektrolytisches Syntheseverfahren für Stickstofftrifluorid gemäß Anspruch 1, wobei die Salzschmelzmischung NH₄F-KF-HF oder NH₄F-HF umfasst.

5. Elektrolytisches Syntheseverfahren für Stickstofftrifluorid gemäß Anspruch 1, wobei die Konzentration der Metallionen im Elektrolyt in einem Bereich von 0,01 M bis zur Sättigungskonzentration liegt.

6. Elektrolytisches Syntheseverfahren für Stickstofftrifluorid gemäß Anspruch 1, wobei die Anode während der Elektrolyse eine Stromdichte von 0.01 bis 10 A/cm² aufweist.

## Revendications

1. Procédé de synthèse électrolytique de trifluorure d'azote, comprenant la synthèse électrolytique de gaz de trifluorure d'azote à partir de fluorure d'ammonium dans un mélange de sel fondu contenant du fluorure d'ammonium en utilisant une électrode carbonée comme une anode,
dans lequel le procédé comprend :
une étape de dissolution, dans le mélange de sel fondu, d'ions de métaux capables de produire électrolytiquement un fluorure de métal hautement oxydé par réaction avec des radicaux fluor (F.) qui sont produits par la décharge d'ions fluorure qui sont un constituant du fluorure d'ammonium, faisant par-là réagir les ions de métaux avec les radicaux fluor (F.) pour produire le fluorure de métal hautement oxydé, et
la réaction du fluorure de métal hautement oxydé avec des ions ammonium sur une surface de l'électrode et dans une solution pour synthétiser du gaz de trifluorure d'azote ;
dans lequel les ions de métaux comprennent des ions d'au moins un métal choisi dans le groupe constitué de Ni, Mn, et Co.

2. Procédé de synthèse électrolytique de trifluorure d'azote selon la revendication 1, dans lequel l'électrode carbonée est une choisie parmi une électrode de carbone amorphe, une électrode de graphite, une électrode de carbone contenant un fluorure de métal, et une électrode en diamant conductrice.

3. Procédé de synthèse électrolytique de trifluorure d'azote selon la revendication 1, dans lequel l'électrode carbonée comprend une base qui est constituée de graphite ou de carbone amorphe.

4. Procédé de synthèse électrolytique de trifluorure d'azote selon la revendication 1, dans lequel le mélange de sel fondu comprend NH₄F-KF-HF ou NH₄F-HF.

5. Procédé de synthèse électrolytique de trifluorure d'azote selon la revendication 1, dans lequel la concentration des ions de métaux dans l'électrolyte est de 0,01 M à une concentration de saturation.

6. Procédé de synthèse électrolytique de trifluorure d'azote selon la revendication 1, dans lequel l'anode présente une densité de courant de 0,01-10 A/cm² au moment de l'électrolyse.
